# EUROPEAN PATENT APPLICATION

(11) **EP 2 484 545 A1**
(43) Date of publication of application: **08.08.2012**
(21) Application number: 10818769.1
(22) Date of filing: 17.09.2010
(51) Int. Cl.: B60J 7/00, B60J 3/00, E06B 9/13, E06B 9/40

(54) **ROLL SHADE DEVICE**

(30) Priority: 28.09.2009 JP 2009222410
(71) Applicant: Aisin Seiki Kabushiki Kaisha, Aichi 448-8650 (JP)
(72) Inventor: KITANI, Takashi, Kariya-shi Aichi 448-8650 (JP); NAKAMURA, Yoshitaka, Kariya-shi Aichi 448-8650 (JP); NINOMIYA, Takanori, Kariya-shi Aichi 448-8650 (JP); KAMIOKU, Naoto, Anjo-shi Aichi 444-1154 (JP)
(74) Representative: Winter, Brandl, Fürniss, Hübner, Röss, Kaiser, Polte - Partnerschaft
(86) International application number: PCT/JP2010/066240
(87) International publication number: WO 2011/037096

(57) **Abstract**

Disclosed is a roll shade device provided with a shading sheet, guide belts, rail members, and a winding mechanism. The shading sheet is moved between a wound state and a deployed state. The guide belts extend in the movement direction of the shading sheet and are connected to the side end sections of the shading sheet. The side end sections are in the shading sheet width direction, which intersects with the movement direction at right angles. The rail members extend in the movement direction and slidably support the guide belts, thereby guiding the movement of the shading sheet. The winding device has a winding roller, which winds up the shading sheet and the guide belts. The guide belts have retaining sections. The retaining sections extend beyond the outer ends of the winding roller and are curved at right angles toward the surface on which the shading sheet moves in the deployed state. In the wound state, portions of the retaining sections that are adjacent to each other not only overlap each other in the shading sheet width direction but are capable of engaging one another.

## Description

### TECHNICAL FIELD

The present invention relates to a roller shade device for a vehicle having a light blocking sheet that is selectively wound and unwound.

### BACKGROUND ART

Patent Document 1 discloses a roller shade device for a vehicle including a light blocking sheet and a winding cylinder for selectively winding and unwinding the light blocking sheet. The light blocking sheet has a pair of flat flexible guide belts, which extend along opposite edges of the light blocking sheet in its width direction. Each of the two guide belts extends in the unwinding direction of the light blocking sheet and is guided by a corresponding one of two guides.

In the device disclosed in Patent Document 1, when the light blocking sheet is wound by the winding cylinder, the guide belts are wound by the winding cylinder in a manner extending parallel to the width direction of the light blocking sheet.

### PRIORART DOCUMENT

Patent Document
Patent Document 1: Japanese National Phase Laid-Open Patent Publication No. 2008-520859

### SUMMARY OF THE INVENTION

### Problems that the Invention is to Solve

However, the device disclosed in Patent Document 1 may cause displacement of the light blocking sheet in the width direction of the light blocking sheet or wrinkle formation in the light blocking sheet when the light blocking sheet is wound by the winding cylinder, thus hampering winding of the light blocking sheet.

Accordingly, it is an objective of the present invention to provide a roller shade device capable of preventing displacement of a light blocking sheet in the width direction of the light blocking sheet at the time when the light blocking sheet is wound.

### Means for Solving the Problems

To achieve the foregoing objective and in accordance one aspect of the present invention, a roller shade device is provided that includes a light blocking sheet, a guide belt, a rail member, and a winding mechanism. The light blocking sheet is moved between a wound state, in which the light blocking sheet is wound to expose a translucent member of a vehicle, and a deployed state, in which the light blocking sheet is deployed to cover the translucent member. The guide belt extends in a movement direction of the light blocking sheet and is connected to an edge portion of the light blocking sheet in a width direction of the light blocking sheet. The width direction is perpendicular to the movement direction. The rail member extends in the movement direction and slidably supports the guide belt to guide movement of the light blocking sheet. The winding mechanism has a winding roller for winding the light blocking sheet and the guide belt. The guide belt has a holding portion that extends to reach a position outward of the winding roller in the width direction and is inclined in such a direction to cross a movement plane on which the light blocking sheet moves when in the deployed state. In the wound state, any adjacent sections of the holding portion are overlapped with and engageable with each other in the width direction of the light blocking sheet. The state of being "inclined in a direction transverse to a movement plane on which the light blocking sheet moves" refers to not only the state of being inclined perpendicular to the movement plane but also a state of being inclined even slightly with respect to the perpendicular direction.

In this configuration, when in the deployed state, the holding portion extends to reach a position outward of the width of the winding roller and is inclined with respect to the direction perpendicular to the movement plane of the light blocking sheet. When in the wound state, the holding portion is rolled in an overlapped manner and any adjacent sections of the holding portion are held in contact with each other in the width direction of the winding roller. As a result, when the light blocking sheet is wound, the light blocking sheet is prevented from being displaced in the width direction.

The light blocking sheet and the guide belt are preferably connected to each other at a position inward of the rail member in the width direction of the light blocking sheet.

In this configuration, the light blocking sheet and the guide belt are connected to each other at a position inward of the rail member in the width direction. This prevents wear of the light blocking sheet and increase of sliding resistance of the light blocking sheet.

### BRIEF DESCRIPTION OF THE DRAWINGS

Fig. 1 is a perspective view showing a roof of a vehicle having a roller shade device according to a first embodiment of the present invention;
Fig. 2 is a perspective view showing the roller shade device mounted in the vehicle illustrated in Fig. 1;
Fig. 3 is a schematic view showing the configuration of a rack belt for actuating a garnish for the roller shade device illustrated in Fig. 1;
Fig. 4 is a cross-sectional view showing a wound state of a light blocking sheet of the roller shade device illustrated in Fig. 2;
Fig. 5 is a cross-sectional view showing a deployed state of the light blocking sheet of the roller shade device illustrated in Fig. 2;
Fig. 6 is a cross-sectional view taken along line 6-6 of Fig. 2;
Fig. 7 is a cross-sectional view showing a winding roller of the roller shade device illustrated in Fig. 2;
Fig. 8 is a front view showing the winding roller illustrated in Fig. 7 with the light blocking sheet shown in a cross section;
Fig. 9 is a cross-sectional view showing a modification of the configuration illustrated in Fig. 6; and
Fig. 10 is a cross-sectional view showing another modification of the configuration illustrated in Fig. 6.

### MODES FOR CARRYING OUT THE INVENTION

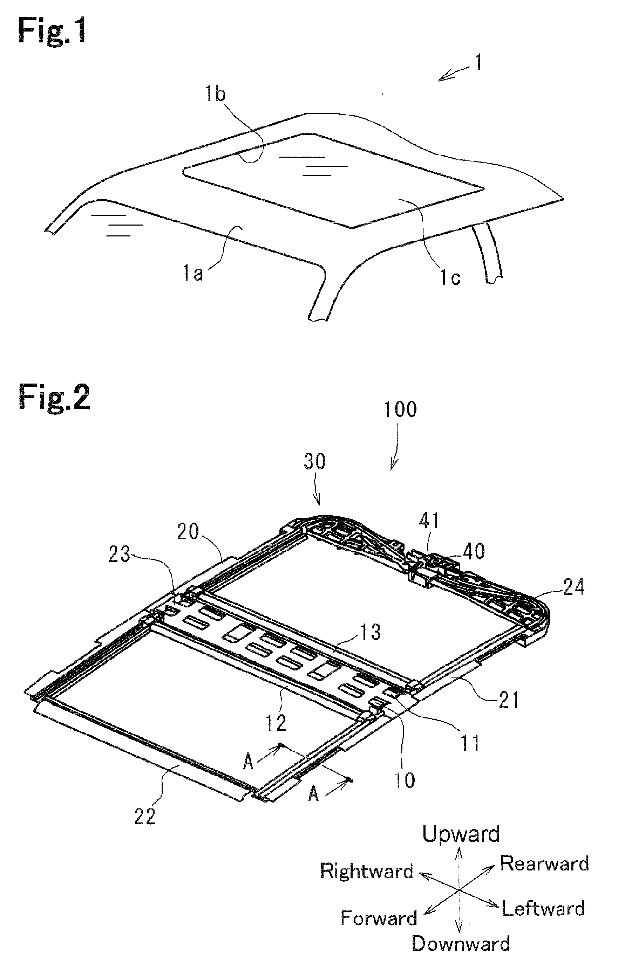

A first embodiment of the present invention will now be described with reference to Figs. 1 to 8.

Fig. 1 is a perspective view showing a roof 1 of a vehicle having a roller shade device 100 according to the first embodiment of the invention. A roof panel 1 a, which configures the roof 1, has an opening 1 b. A glass panel (a translucent member) 1 c is mounted on the roof panel 1 a to block the opening 1 b. The roller shade device 100, which is shown in Fig. 2, is arranged below the roof panel 1 a. The glass panel 1 c may be either fixed or movable with respect to the roof panel 1 a.

Fig. 2 is a perspective view showing the roller shade device 100. The roller shade device 100 has light blocking sheets 10, 11, guide rails (rail members) 20, 21, and a winding mechanism 30. Each of the light blocking sheets 10, 11 is movable between a wound state in which the light blocking sheet 10, 11 is wound to expose the glass panel 1 c to the interior of the passenger compartment and a deployed state in which the light blocking sheet 10, 11 is deployed to cover the glass panel 1c from inside the passenger compartment.

The guide rails 20, 21 are mounted in the roof panel 1 a at opposite sides of the opening 1 b in the vehicle width direction (the width direction) and face each other. The guide rails 20, 21 extend in the vehicle forward-rearward direction. A front frame 22 extends between front end portions of the guide rails 20, 21 and a central frame 23 extends between middle portions of the guide rails 20, 21. A resin housing 24 is arranged between rear end portions of the guide rails 20, 21.

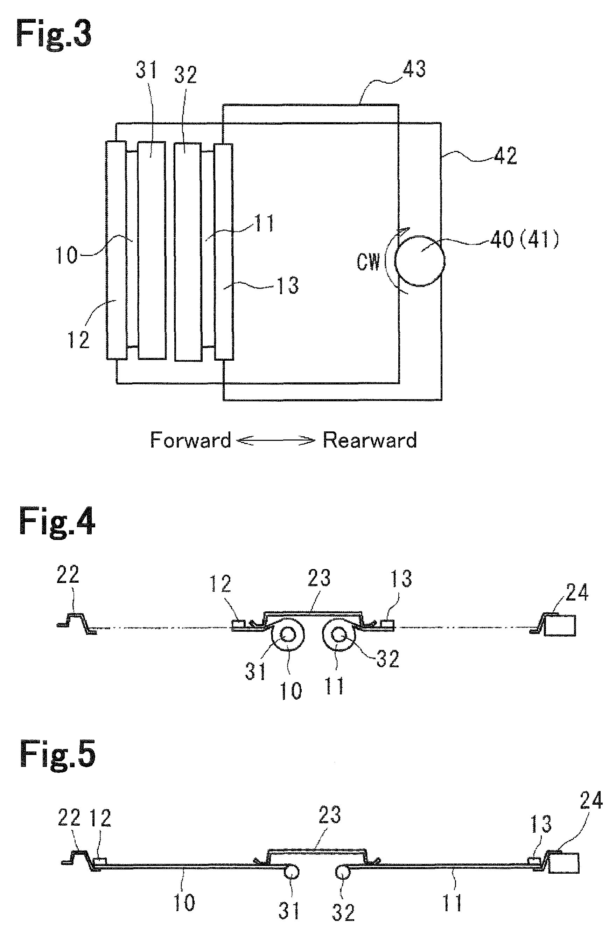

An actuator 40 is arranged at a longitudinal central portion of the resin housing 24. The actuator 40 has an electric motor (not shown) and an actuation gear 41, which is actuated by the motor. As shown in Fig. 3, a pair of rack belts 42, 43 are meshed with the actuation gear 41. As the actuation gear 41 rotates, each of the rack belts 42, 43 moves such that one end of the rack belt 42, 43 is drawn to the actuation gear 41 and the other end of the rack belt 42, 43 is fed out from the actuation gear 41. The rack belts 42, 43 extend from the actuation gear 41 and project along the resin housing 24. The rack belts 42, 43 are guided by the corresponding guide rails 20, 21.

A winding roller 31 and a winding roller 32 are arranged in a front portion and a rear portion, respectively, of the central frame 23. Each of the winding rollers 31, 32 is supported by a winding shaft that extends in the vehicle width direction. The winding shafts are supported by the central frame 23. A first end of each of the light blocking sheets 10, 11 (see Figs. 3 to 5), which is selectively wound and unwound, is connected to the corresponding one of the winding rollers 31, 32. Each winding roller 31, 32 incorporates an urging member for constantly urging the winding roller 31, 32 such that the rotating force acting in the winding direction of the corresponding light blocking sheet 10, 11 is applied to the winding roller 31, 32.

A garnish 12 and a garnish 13, which extend in the vehicle width direction (the width direction of each light blocking sheet 10, 11) and parallel to the winding rollers 31, 32, are connected to a second end of the light blocking sheet 10 and a second end of the light blocking sheet 11, respectively (see Figs. 2 to 5).

Opposite longitudinal ends of each of the garnishes 12, 13 are connected to the rack belts 42, 43. As the rack belts 42, 43 move, the garnishes 12, 13 move in the vehicle forward-rearward direction, together with the corresponding light blocking sheets 10, 11.

Fig. 3 is a schematic view showing the rack belts 42, 43, which move the associated garnishes 12, 13. The rack belt 42 is meshed with the actuation gear 41 from behind the actuation gear 41 in the vehicle and connected to a first end of the garnish 12 and a second end of the garnish 13. The rack belt 43 is meshed with the actuation gear 41 from in front of the actuation gear 41 in the vehicle and connected to a second end of the garnish 12 and a first end of the garnish 13. When the actuator 40 is actuated, the rack belts 42, 43 move in opposite directions. If the actuation gear 41 rotates in the CW direction (clockwise as viewed in Fig. 3), the garnish 12 moves rearward in the vehicle (in an opening direction) and the garnish 13 moves forward in the vehicle (in an opening direction). As a result, the light blocking sheets 10, 11 are wound by the corresponding winding rollers 31, 32 and thus held each in a wound state (see Fig. 4). When the actuation gear 41 rotates in the opposite direction to the CW direction (counterclockwise as viewed in Fig. 3), the garnish 12 moves forward in the vehicle (in a closing direction) and the garnish 13 moves rearward in the vehicle (in a closing direction). This causes the winding rollers 31, 32 to deploy the corresponding light blocking sheets 10, 11, thus bringing about a deployed state (see Fig. 5) of each light blocking sheet 10, 11.

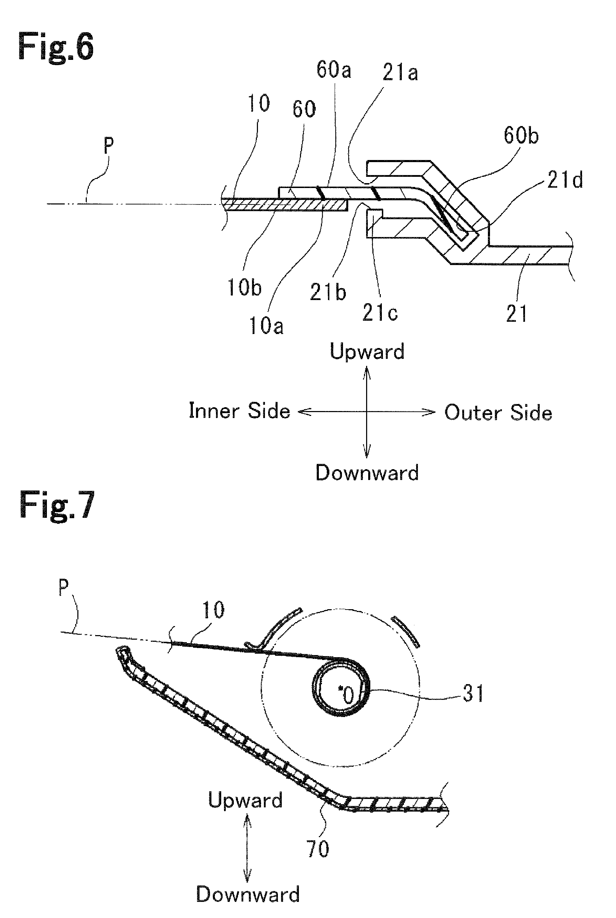

Fig. 6 is a cross-sectional view taken along line 6-6 of Fig. 2, showing the deployed state of the light blocking sheet 10. The drawing illustrates engagement structure between the light blocking sheet 10 and the guide rail 21. Flexible belts (guide belts) 60 are attached to either edge portion 10a of the light blocking sheet 10 in the vehicle width direction. Each of the flexible belts 60 is formed of flexible material (such as resin material) and has an elongated shape. The flexible belts 60 extend in the vehicle forward-rearward direction. The guide rail 21 slidably supports the corresponding flexible belt 60 and guides movement of the light blocking sheet 10. The flexible belt 60 is wound by the winding roller 31 integrally with the light blocking sheet 10.

Each flexible belt 60 has a connecting portion 60a and a holding portion 60b. The connecting portion 60a is parallel to the movement plane P, on which the light blocking sheet 10 moves (the plane on which the light blocking sheet 10 passes while being wound or deployed). The connecting portion 60a is fixed to the top surface of the light blocking sheet 10 through sewing or using adhesive. A fixing portion 10b of the light blocking sheet 10 to which the connecting portion 60a is fixed is arranged inward of the guide rail 21 in the vehicle width direction. The light blocking sheet 10 is thus prevented from sliding on the guide rail 21. This prevents wear of the light blocking sheet 10 and increase in sliding resistance. When the light blocking sheet 10 is in the deployed state, the holding portion 60b is inclined diagonally downward of the movement plane P. The guide rail 21 has an opening 21 a and an engagement groove 21 d. The opening 21 a is located inward in the vehicle width direction and receives the connecting portion 60a. The holding portion 60b is arranged in the engagement groove 21 d. The engagement groove 21 d communicates with the opening 21 a and is inclined diagonally downward of the movement plane P. A projection 21 c, which has a flat surface 21 b parallel to the movement plane P, is formed at the opening end of the opening 21 a in the guide rail 21. The flat surface 21 b, which is the top surface of the projection 21 c, may contact the connecting portion 60a of the flexible belt 60 and hold the connecting portion 60a parallel to the movement plane P of the light blocking sheet 10, thus promoting smooth movement of the light blocking sheet 10 and the flexible belt 60. Also, since the flat surface 21 b is capable of contacting a portion of the flexible belt 60, sliding resistance of the flexible belt 60 against the guide rail 21 is decreased. The inner surfaces of the guide rail 21 forming the engagement groove 21 d contact the holding portion 60b of the flexible belt 60. This prevents the flexible belt 60 from escaping inwardly in the vehicle width direction and applies tensile force to the light blocking sheet 10 in the vehicle width direction, thus preventing flipping of the light blocking sheet 10. The engagement structure between the light blocking sheet 10 and the guide rail 20 and the engagement structure between the light blocking sheet 11 and each of the guide rails 20, 21 are identical to the above-described engagement structure between the light blocking sheet 10 and the guide rail 21. Description thereof is thus omitted.

Fig. 7 is a cross-sectional view showing the winding roller 31 as viewed from the left in the vehicle width direction. The rotational axis O of the winding roller 31 is located below the movement plane P of the light blocking sheet 10. As the winding roller 31 rotates clockwise about the rotational axis O as viewed in Fig. 7, the winding roller 31 winds the light blocking sheet 10. A ceiling member 70 is arranged below the winding roller 31 (the roller shade device 100) such that the winding roller 31 (the roller shade device 100) cannot be seen from occupants in the vehicle. The rotational axis of the winding roller 32 is arranged below the movement plane of the corresponding light blocking sheet 11, as in the case of the winding roller 31. When the winding roller 32 rotates counterclockwise about the rotational axis as viewed from the left in the vehicle width direction, the light blocking sheet 11 is wound by the winding roller 32.

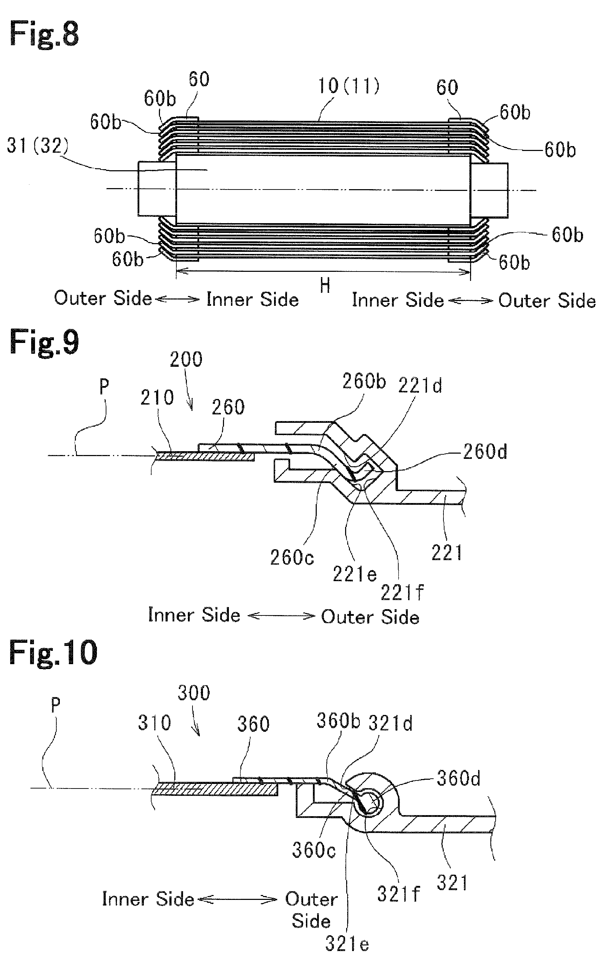

Fig. 8 is a front view showing the winding roller 31 (32) with the light blocking sheet 10 (11) illustrated in cross section. The holding portions 60b, 60b of the flexible belts 60, 60, which are connected to the opposite sides of the light blocking sheet 10 (11) in the vehicle width direction, extend to reach positions outward of the winding roller 31 (32) in the vehicle width direction. When the light blocking sheet 10 (11) is in the deployed state, each of the holding portions 60b is inclined diagonally downward of the movement plane P of the light blocking sheet 10(11). In contrast, when the light blocking sheet 10 (11) is in the wound state, each holding portion 60b is wound by the winding roller 31 (32) in a state inclined toward the rotational axis O. When the light blocking sheet 10 (11) is held in the wound state, the holding portion 60b is rolled in an overlapped manner in the vehicle width direction and any adjacent sections of the holding portion 60b are held in contact with each other in the vehicle width direction. In other words, when the light blocking sheet 10 (11) is in the wound state, any adjacent sections of each holding portion 60b are overlapped with each other and held in mutual contact in the vehicle width direction. As a result, when the light blocking sheet 10 (11) is wound by the winding roller 31 (32), the holding portions 60b, 60b restrict leftward-rightward movement of the light blocking sheet 10 (11) in the vehicle width direction. This prevents displacement of the light blocking sheet 10 (11) in the width direction. Specifically, as long as any adjacent sections of each holding portion 60b can contact each other at the time when the winding roller 31 (32) winds the light blocking sheet 10 (11), the adjacent sections do not necessarily have to be held in contact with each other. In other words, as long as the light blocking sheet 10 (11) is not displaced in the width direction, any adjacent sections of each holding portion 60b are overlapped with each other without contacting each other. Once the light blocking sheet 10 (11) is displaced even slightly in the width direction, any adjacent sections of the holding portion 60b may come into contact with each other to prevent more displacement of the light blocking sheet 10 (11). Alternatively, a similar advantage may be obtained even if each holding portion 60b is modified to a shape inclined diagonally upward of the movement plane P.

A second embodiment of the present invention will hereafter be described with reference to Fig. 9.

Fig. 9 is a cross-sectional view showing a main portion of a roller shade device 200 according to the second embodiment of the invention. The second embodiment is a modification of the configuration illustrated in Fig. 6 and differs from the first embodiment in terms of the engagement structure between a light blocking sheet 210 (a flexible belt 260) and a guide rail 221 (the shapes of a holding portion 260b and an engagement groove 221 d). Since the other portions of the second embodiment are configured identically to corresponding portions of the first embodiment, description of these portions is omitted.

The holding portion 260b has a downwardly inclined portion (a first inclined portion) 260c and an upward inclined portion (a second inclined portion) 260d. The downwardly inclined portion 260c is inclined diagonally downward of the movement plane P. The upwardly inclined portion 260d extends from the downwardly inclined portion 260c and is inclined diagonally upward with respect to the movement plane P. The downwardly inclined portion 260c and the upwardly inclined portion 260d are formed continuously with each other.

The engagement groove 221 d has a downward engagement groove section 221 e, which is inclined diagonally downward with respect to the movement plane P, and an upward engagement groove section 221f. The upward engagement groove section 221f extends from the downward engagement groove section 221 e in a manner inclined diagonally upward with respect to the movement plane P. The upward engagement groove section 221f and the downward engagement groove section 221 e are formed continuously with each other.

The downward engagement groove section 221 e and the upward engagement groove section 221f are engaged with the downwardly inclined portion 260c and the upwardly inclined portion 260d, respectively. This prevents the holding portion 260b from escaping inwardly from the engagement groove 221 d in the vehicle width direction. Further, when each light blocking sheet 10, 11 is wound by the corresponding winding roller 31, 32, the holding portion 260b is rolled up in an overlapped manner and any adjacent sections of the holding portion 260b are held in contact with each other in the vehicle width direction. This restricts movement of the light blocking sheet 10, 11 in the width direction, thus preventing displacement of the light blocking sheet 10, 11 in the width direction.

A third embodiment of the present invention will hereafter be described with reference to Fig. 10.

Fig. 10 is a cross-sectional view showing a main portion of a roller shade device 300 according to the third embodiment of the invention. The third embodiment is another modification of the configuration illustrated in Fig. 6 and differs from the first embodiment in terms of the engagement structure between a light blocking sheet 310 (a flexible belt 360) and a guide rail 321 (the shapes of a holding portion 360b and an engagement groove 321 d). Since the other portions of the third embodiment are configured identically to corresponding portions of the first embodiment, description of these portions is omitted.

The holding portion 360b has a inclined portion 360c, which is inclined diagonally downward with respect to the movement plane P, and an engagement belt 360d having a circular cross section. The engagement belt 360d is formed at the distal end of the inclined portion 360c.

The engagement groove 321 d has a downward engagement groove section 321 e, which extends in a manner inclined diagonally downward with respect to the movement plane P, and an engagement hole 321f having a circular cross section. The engagement hole 321f is arranged at the distal end (the bottom) of the engagement groove section 321 e.

The engagement groove section 321 e and the engagement hole 321f are engaged with the inclined portion 360c and the engagement belt 360d, respectively. This prevents the holding portion 360b from escaping inwardly from the engagement groove 321 d in the vehicle width direction. Further, when each light blocking sheet 10, 11 is wound by the corresponding winding roller 31, 32, the holding portion 360b is rolled in an overlapped manner and any adjacent sections of the holding portion 360b are held in contact with each other in the vehicle width direction. This restricts movement of the light blocking sheet 10, 11 in the width direction, thus preventing displacement of the light blocking sheet 10, 11 in the width direction. Specifically, the engagement belt 360d does not necessarily require a circular cross section. That is, as long as the thickness of the engagement belt 360d is greater than the thickness of the inclined portion 360c, the engagement belt 360d may have a cross section with any other suitable shape, such as a square or triangular shape.

Each holding portion 60b, 260b, 360b may be inclined in any suitable manner as long as the holding portion 60b, 260b, 360b is inclined downward or upward in a manner crossing the movement plane P. That is, the holding portion 60b, 260b, 360b may be inclined perpendicularly to the movement plane P.

### DESCRIPTION OF THE REFERENCE NUMERALS

P... Movement Plane, 1c... Glass Panel (Translucent Member), 10, 11... Light Blocking Sheet, 10a... Edge Portion, 20, 21... Guide Rail (Rail Member), 30... Winding Mechanism, 31, 32... Winding Roller, 60... Flexible Belt (Guide Belt), 60b, 260b, 360b... Holding Portion, 100, 200, 300... Roller Shade Device

## Claims

1. A roller shade device comprising:
a light blocking sheet that is moved between a wound state, in which the light blocking sheet is wound to expose a translucent member of a vehicle, and a deployed state, in which the light blocking sheet is deployed to cover the translucent member;
a guide belt that extends in a movement direction of the light blocking sheet and is connected to an edge portion of the light blocking sheet in a width direction of the light blocking sheet, the width direction being perpendicular to the movement direction;
a rail member that extends in the movement direction and slidably supports the guide belt to guide movement of the light blocking sheet; and
a winding mechanism having a winding roller for winding the light blocking sheet and the guide belt, wherein
the guide belt has a holding portion that extends to reach a position outward of the winding roller in the width direction and is inclined in such a direction to cross a movement plane on which the light blocking sheet moves when in the deployed state, and
in the wound state, any adjacent sections of the holding portion are overlapped with and engageable with each other in the width direction of the light blocking sheet.

2. The roller shade device according to claim 1, wherein the light blocking sheet and the guide belt are connected to each other at a position inward of the rail member in the width direction of the light blocking sheet.

3. The roller shade device according to claim 1 or 2, wherein, in the wound state, the holding portion is wound by the winding roller in a manner inclined toward the rotational axis of the winding roller.

4. The roller shade device according to any one of claims 1 to 3, wherein, in the deployed state, the holding portion is inclined downward with respect to the movement plane of the light blocking sheet.

5. The roller shade device according to any one of claims 1 to 3, wherein, in the deployed state, the holding portion has a first inclined portion, which is inclined in a direction transverse to the movement plane of the light blocking sheet, and a second inclined portion, which extends from the first inclined portion in a manner inclined in a different direction.

6. The roller shade device according to any one of claims 1 to 3, wherein, in the deployed state, the holding portion has an inclined portion, which is inclined in a direction transverse to the movement plane of the light blocking sheet, and an engagement belt, which is provided at a distal end of the inclined portion and has a thickness greater than the thickness of the inclined portion.
